# EUROPEAN PATENT SPECIFICATION

(11) **EP 4 403 392 B1**
(45) Date of publication and mention of the grant of the patent: **14.01.2026**
(21) Application number: 24151778.8
(22) Date of filing: 15.01.2024
(51) Int. Cl.: B60J 7/12, B60J 7/14

(54) **OPENABLE ROOF FOR SPORTS CARS**
ÖFFNUNGSFÄHIGES DACH FÜR SPORTWAGEN
TOIT OUVRANT POUR VOITURES DE SPORT

(30) Priority: 17.01.2023 IT 202300000606
(43) Date of publication of application: 24.07.2024
(73) Proprietor: FERRARI S.p.A., 41100 Modena (IT)
(72) Inventor: FAVARETTO, Fabrizio, 41100 MODENA (IT)
(74) Representative: Studio Torta S.p.A.

(56) References cited:
- FR-A- 1 382 296
- FR-A- 473 167
- US-A- 5 620 226

## Description

### CROSS-REFERENCE TO RELATED APPLICATIONS

This patent application claims priority from Italian patent application no. 102023000000606 filed on January 17, 2023.

### TECHNICAL FIELD

The invention relates to an openable roof for sports cars.

### BACKGROUND

In particular, the invention relates to an openable roof for sports cars of the kind comprising a containing tank obtained at the back of a passenger compartment of a sports car; a fabric cover to cover the passenger compartment; and an operating unit to move the fabric cover between an opening position, in which the fabric cover is housed inside the containing tank in order to open the roof, and a closing position, in which the fabric cover extends on the outside of the containing tank in order to close the roof.

The operating unit comprises two lever mechanisms, which are parallel to one another and to a driving direction of the sports car, and a front bar, which extends between the two lever mechanisms and is configured to be coupled to a support ring of a front windshield of the sports car following the movement of the fabric cover to its closing position.

The operating unit further comprises at least one stiffening cross member, which extends between the two lever mechanisms and has a constant length.

The fabric cover is fixed to the front bar and to the two lever mechanisms so as to be moved between a spread configuration on the outside of the containing tank, when the roof is closed, and a folded configuration inside the containing tank, when the roof is open. A similar roof is disclosed in FR 1 382 296 A.

Since the distance between the two lever mechanisms in the closing position substantially is the same as the distance between the two lever mechanisms in the opening position, known openable roofs for sports cars of the kind described above suffer from some drawbacks, which are mainly due to the fact that the containing tank needs to have, in plan view, a substantially rectangular shape and that, as a consequence, said openable roofs are not suited to be installed in sports cars with a shape that is tapered towards the back.

### SUMMARY

The object of the present invention is to provide an openable roof for sports cars which is not affected by the aforementioned drawbacks and can be manufactured in a simple and economic fashion.

According to the present invention, there is provided an openable roof for sports cars as claimed in the appended claims.

### BRIEF DESCRIPTION OF THE DRAWINGS

The invention will now be described with reference to the accompanying drawings showing a non-limiting embodiment thereof, wherein:
figure 1 is a schematic plan view, with parts removed for greater clarity, of a sports car provided with a preferred embodiment of the openable roof according to the present invention;
figures 2, 3, 4 and 5 are four schematic perspective views, with parts removed for greater clarity, of a detail of the sports car of figure 1 shown in four different operating positions;
figures 6, 7 and 8 are three schematic perspective views, with parts removed for greater clarity, of a detail of figures 2, 3, 4 and 5 shown in three different operating positions; and
figures 9, 10 and 11 are three schematic perspective views, with parts removed for greater clarity, of a detail of figures 6, 7 and 8 shown in three different operating positions.

### DESCRIPTION OF EMBODIMENTS

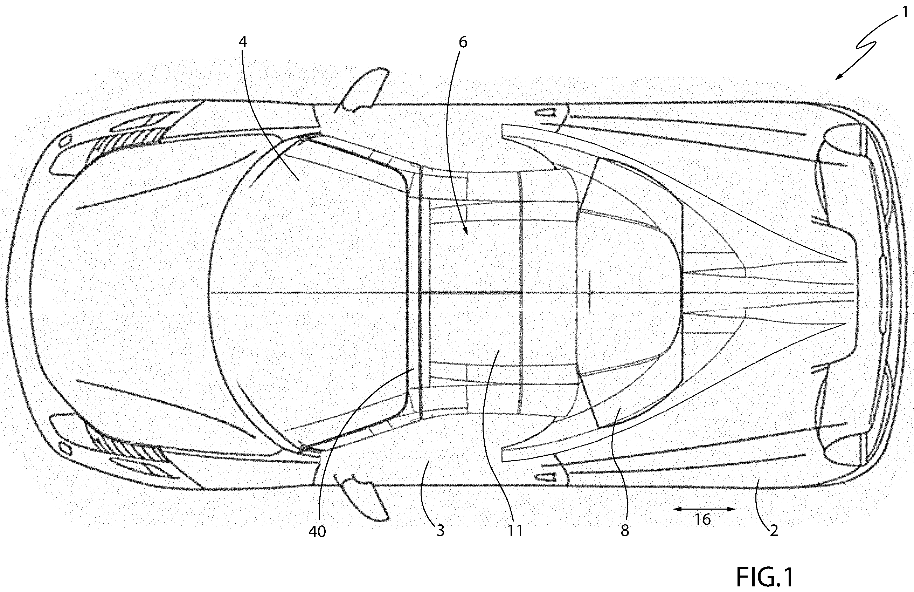

With reference to figure 1, number 1 indicates, as a whole, a sports car comprising an outer body 2 having a shape that is tapered towards the back of the car 1 and a passenger compartment 3 projecting upwards from a lower floor of the car 1 in order to accommodate, on the inside, at least the driver of the car 1.

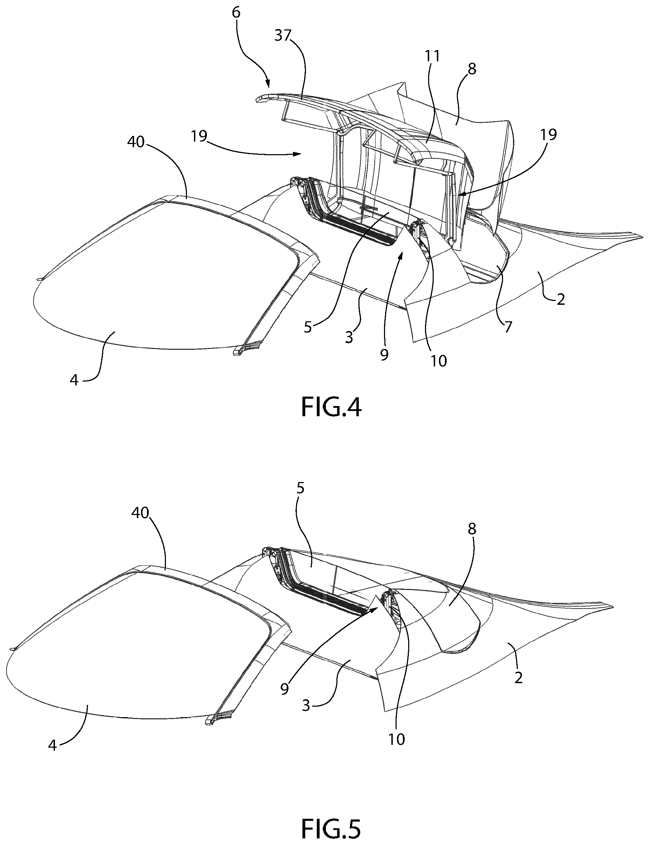

The passenger compartment 3 is closed by a front windshield 4, by a rear windshield 5 (figures 4 and 5) and by an openable roof 6.

The roof 6 comprises a containing tank 7, which is obtained at the back of the passenger compartment 3 and has, in plan view, the shape of a trapezium arranged with its larger base between the passenger compartment 3 and a smaller base of its.

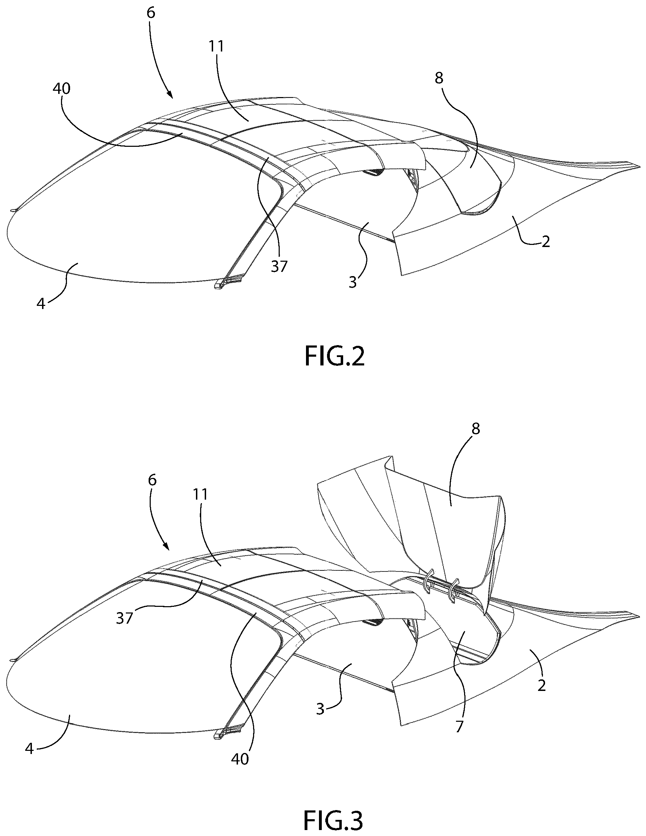

The tank 7 is closed by a lid 8 coupled to the body 2 in a rotary manner so as to move between a closing position (figures 2 and 5) and an opening position (figures 3 and 4) closing and opening the tank 7.

The roof 6 further has a support frame 9, which is integrated in the body 2 and is provided with two vertical uprights 10 parallel to one another and projecting into the tank 7.

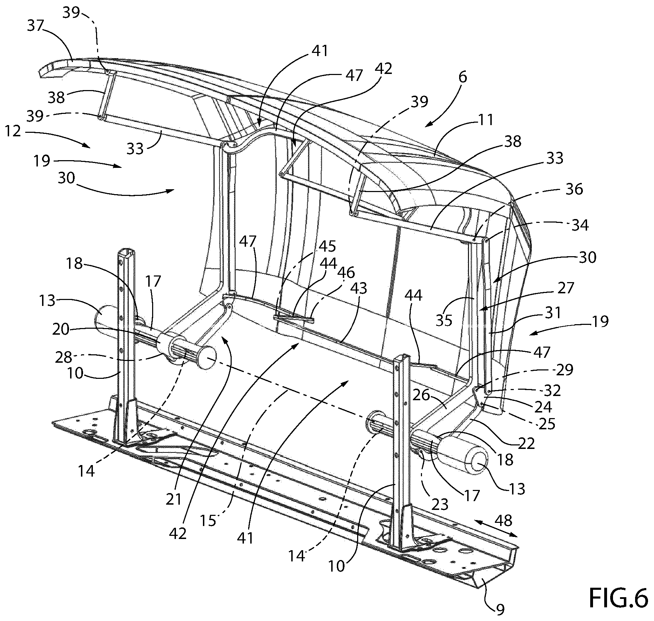

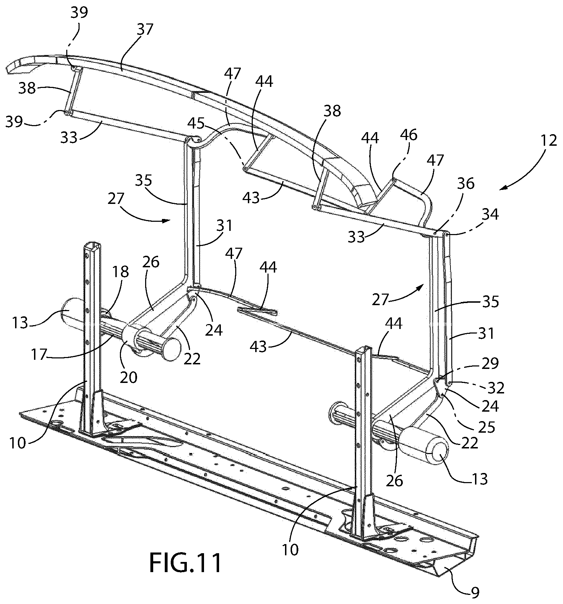

According to figures 2 to 11, the roof 6 further comprises a fabric cover 11 to close the passenger compartment 3 at the top and an operating unit 12 to move the cover 11 between an opening position, in which the cover 11 is arranged inside the tank 7 in order to open the roof 6, and a closing position, in which the cover 11 is arranged on the outside of the tank 7 in order to close the roof 6.

The operating unit 12 comprises two electric motors 13, which are aligned with and face one another and have respective output shafts 14 mounted so as to rotate around a common rotation axis 15, which is substantially transverse to a driving direction 16 of the car 1.

Each motor 13 is fixed to a sleeve 17, which is coaxial to the axis 15, extends around the relative shaft 14 and is fixed, in turn, to a relative upright 10.

Each sleeve 17 has a helical guide 18, which is obtained through the sleeve 17 and is wound like a spiral around and along said axis 15.

The unit 12 further comprises two lever mechanisms 19 parallel to one another, each associated with a relative motor 13 and comprising a collar 20, which is fitted on the relative sleeve 17 coaxial to the axis 15 and is coupled to the relative shaft 14 by means of a screw-nut screw coupling, in particular by means of a recirculating ball coupling, and is further coupled to the guide 18 of the sleeve 17 so as to move, with a rotation-translation movement, along and around the aforesaid axis 15.

The collar 20 defines the first member of a first articulated quadrilateral 21 further comprising a second member 22 with an elongated shape coupled in a rotary manner, on one side, to the collar 20 so as to rotate, relative to the collar 20, around a rotation axis 23 parallel to the axis 15 and, on the other side, to a third member 24 of the first articulated quadrilateral 21 so as to rotate, relative to the member 24, around a rotation axis 25 parallel to the axis 15.

The articulated quadrilateral 21 further comprises a fourth member 26, which is defined by a first arm of a rocker arm 27 and extends between two rotation axes 28, 29 parallel to one another and to the axis 15, the axis 28 being the rotation axis between the collar 20 and the member 26 and the axis 29 being the rotation axis between the rocker arm 27 and the member 24.

The member 24 defines the first member of a second articulated quadrilateral 30 comprising, in addition, a second member 31 with an elongated shape coupled in a rotary manner, on one side, to the member 24 so as to rotate, relative to the member 24, around a rotation axis 32 parallel to the axis 15 and, on the other side, to a third member 33 of the second articulated quadrilateral 30 so as to rotate, relative to the member 33, around a rotation axis 34 parallel to the axis 15.

The second articulated quadrilateral 30 further comprises a fourth member 35, which is defined by a second arm of the rocker arm 27 and extends between the axis 29 and a rotation axis 36 of the member 35 relative to the member 33.

The members 33 of the two lever mechanisms 19 have an elongated shape, project from the second articulated quadrilateral 30 and have respective free ends connected to a front bar 37 of the operating unit 12.

Each member 33 is connected to the bar 37 through the interposition of a connecting rod 38, which extends between two rotation axes 39 transverse to the axis 15, one of them being the rotation axis of the connecting rod 38 relative to the member 33 and the other one being the rotation axis of the connecting rod 38 relative to the bar 37.

The bar 37 is configured to be coupled to a support ring 40 of the front windshield 4 following the movement of the cover 11 to its closing position.

The operating unit 12 further comprises, in this specific case, two stiffening cross members 41 with a variable length to connect the two lever mechanisms 19 to one another.

Each cross member 41 comprises, in this specific case, a crank mechanism 42 comprising, in turn, a central connecting rod 43 and two side cranks 44, each extending between two rotation axes 45, 46 parallel to one another and transverse to the axis 15, the axis 45 being the rotation axis of the crank 44 relative to the connecting rod 43 and the axis 46 being the rotation axis of the crank 44 relative to a coupling bracket 47 shaped so as to project from the rocker arm 27 of a relative lever mechanism 19 towards the other lever mechanism 19.

With regard to what disclosed above, it should finally be pointed out that the cover 11 is coupled to the front bar 37 and to the lever mechanisms 19.

In use, the activation of the electric motors 13 leads to the rotation of the relative output shafts 14 and, hence, to the rotation-translation movement of the collars 20 along and around said axis 15.

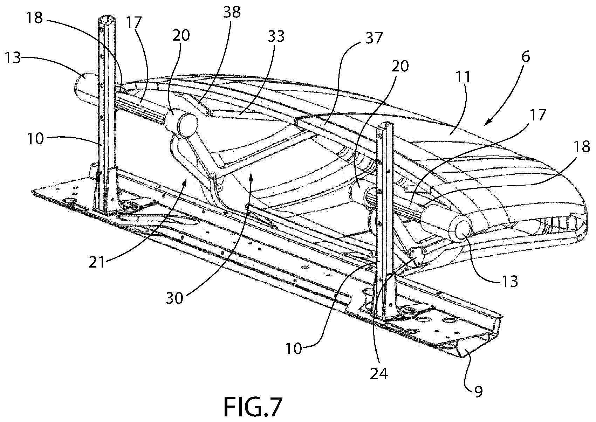

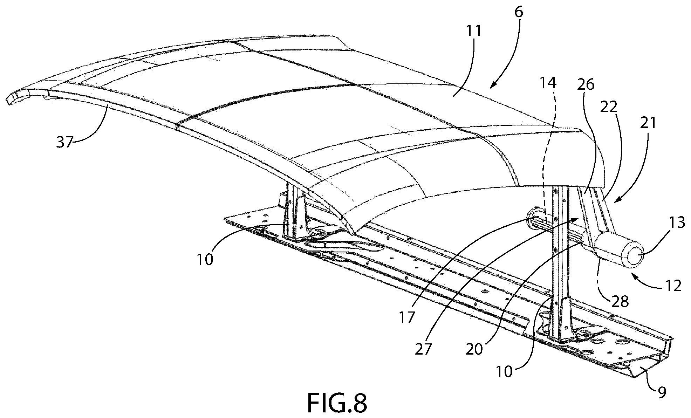

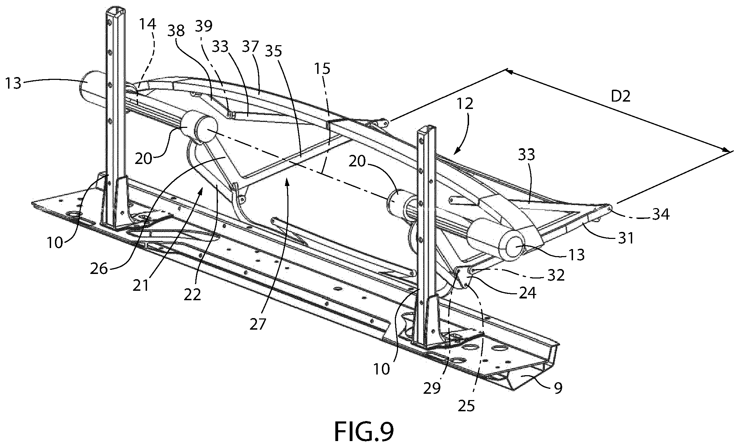

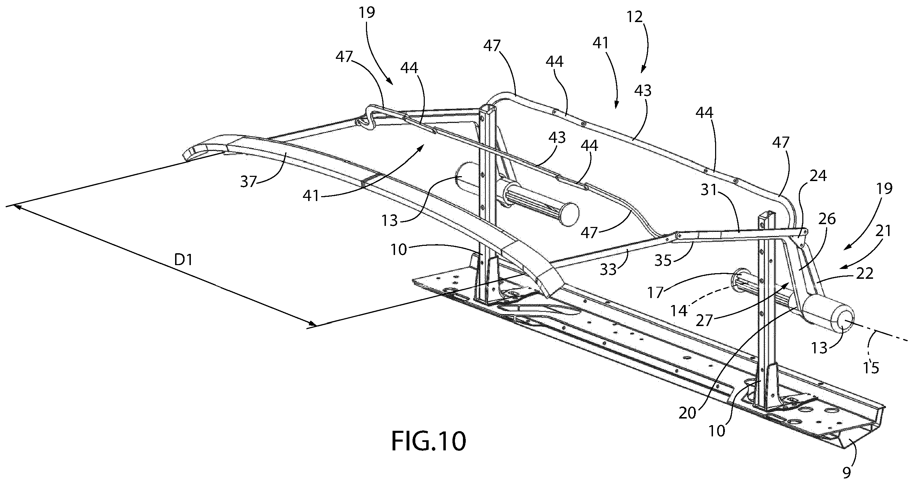

The combination of the movement of the collars 20 in a moving direction 48 parallel to the axis 15 with the movement of the collars 20 around the axis 15 leads to the movement of the lever mechanisms 19 between a wide position (figures 8 and 10), in which the lever mechanisms 19 are arranged on the outside of the containing tank 7 and at a distance D1 from one another measured parallel to the direction 48, and a narrow position (figures 7 and 9), in which the lever mechanisms 19 are arranged inside the containing tank 7 and at a distance D2 from one another, also measured parallel to the direction 48, that is smaller than both the distance D1 and the minimum width of the tank 7.

As a consequence, the lever mechanisms 19 and the cover 11 are movable between the opening position of the roof 6 (figure 7), in which the lever mechanisms 19 get closer to one another in the direction 48 in order to get into the tank 7 and store the cover 11 in a U-shaped configuration inside the tank 7, and the closing position of the roof 6 (figure 8), in which the lever mechanisms 19 move away from one another in the direction 48 in order to place themselves on the outside of the tank 7 and move the cover 11 to a spread configuration on the outside of the tank 7.

According to a variant which is not shown herein, the crank mechanisms 42 are eliminated and replaced by respective telescopic bars.

## Claims

1. An openable roof for sports cars, the roof comprising a containing tank (7); a fabric cover (11); and an operating unit (12) to move the fabric cover (11) between an opening position, in which the fabric cover (11) is housed inside the containing tank (7) in order to open the roof, and a closing position, in which the fabric cover (11) extends on the outside of the containing tank (7) in order to close the roof; the operating unit (12) comprising two lever mechanisms (19), which are parallel to one another and to a driving direction (16) of the sports car, and a front bar (37), which extends between the two lever mechanisms (19) and is configured to be coupled to a support ring (40) of a front windshield (4) of the sports car following the movement of the fabric cover (11) to its closing position; the fabric cover (11) being fixed to the front bar (37) and to the two lever mechanisms (19); the two lever mechanisms (19) being movable relative to one another in a moving direction (48), which is transverse to the driving direction (16) of the sports car, between a narrow position, in which the lever mechanisms (19) are arranged inside the containing tank (7) following the movement of the fabric cover (11) to its opening position, and a wide position, in which the lever mechanisms (19) extend on the outside of the containing tank (7) following the movement of the fabric cover (11) to its closing position; and being **characterized in that**:
the operating unit (12) comprises, for each lever mechanism (19), a respective actuator device (13) to move the lever mechanism (19) in the moving direction (48) between its narrow and wide positions;
each lever mechanism (19) comprises a first articulated quadrilateral (21) connected to the relative actuator device (13) and a second articulated quadrilateral (30) interposed between the first articulated quadrilateral (21) and the front bar (37);
each actuator device (13) comprises an electric motor provided with an output shaft (14) mounted so as to rotate around a rotation axis (15), which is substantially parallel to the moving direction (48); and
the first articulated quadrilateral (21) of each lever mechanism (19) comprises a first member (20) coupled to the output shaft (14) of the relative electric motor so as to move with a rotation-translation motion along and around said rotation axis (15).

2. The openable roof according to claim 1, wherein the distance (D2) between the lever mechanisms (19) arranged in their narrow position, which is measured parallel to the moving direction (48), is smaller than the distance (D1) between the lever mechanisms (19) arranged in their wide position and than the minimum width of the containing tank (7), which are also measured parallel to the moving direction (48).

3. The openable roof according to claim 1 or 2, wherein the operating unit (12) further comprises at least one stiffening cross member (41) with a variable length interposed between the lever mechanisms (19) in order to connect the lever mechanisms (19) to one another.

4. The openable roof according to claim 3, wherein the stiffening cross member (41) comprises a telescopic bar or a crank mechanism (42).

5. The openable roof according to any one of the preceding claims, wherein the first articulated quadrilateral (21) further comprises a second member (22) and a third member (26), which are connected to the first member (20) in a rotary manner, and a fourth member (24), which is connected to said second and third member (22, 26) in a rotary manner.

6. The openable roof according to claim 5, wherein the second articulated quadrilateral (30) comprises a fifth and a sixth member (31, 35), which are connected to the fourth member (24) in a rotary manner, and a seventh member (33), which is connected to said fifth and sixth member (31, 35) in a rotary manner and projects from the second articulated quadrilateral (30); the front bar (37) being connected to the seventh members (33) of the two lever mechanisms (19).

7. The openable roof according to claim 6, wherein the front bar (37) is coupled to the seventh member (33) of each second articulated quadrilateral (30) through the interposition of a relative connecting rod (38) coupled to the seventh member (33) and to the front bar (37) in a rotary manner.

8. The openable roof according to any one of the preceding claims, wherein the operating unit (12) further comprises, for each electric motor, a respective helical guide (18), which extends around the output shaft (14) of the electric motor, is wound like a spiral around and along said rotation axis (15) and is engaged with a rotation-translation motion by the first member (20) of the relative first articulated quadrilateral (21).

9. The openable roof according to any one of the preceding claims, wherein the fabric cover (11) has, when the roof is closed, a spread configuration and further has, when the roof is open, a U-folded configuration inside the containing tank (7).

10. The openable roof according to any one of the preceding claims, wherein the containing tank (7) has, in plan view, a substantially trapezoid-like shape.

## Patentansprüche

1. Öffnungsfähiges Dach für Sportwagen, wobei das Dach einen Aufnahmetank (7), eine Stoffabdeckung (11) und eine Bedieneinheit (12) zum Bewegen der Stoffabdeckung (11) zwischen einer Öffnungsposition, in der die Stoffabdeckung (11) innerhalb des Aufnahmetanks (7) untergebracht ist, um das Dach zu öffnen, und einer Schließposition, in der sich die Stoffabdeckung (11) an der Außenseite des Aufnahmetanks (7) erstreckt, um das Dach zu schließen, umfasst; wobei die Bedieneinheit (12) zwei Hebelmechanismen (19), die parallel zueinander und zu einer Fahrtrichtung (16) des Sportwagens sind, und eine vordere Stange (37) umfasst, die sich zwischen den zwei Hebelmechanismen (19) erstreckt und so konfiguriert ist, dass sie mit einem Stützring (40) einer Frontscheibe (4) des Sportwagens gekoppelt wird, nachdem die Stoffabdeckung (11) in ihre Schließposition bewegt wurde; wobei die Stoffabdeckung (11) an der vorderen Stange (37) und an den zwei Hebelmechanismen (19) befestigt ist; wobei die zwei Hebelmechanismen (19) relativ zueinander in einer Bewegungsrichtung (48), die quer zur Fahrtrichtung (16) des Sportwagens verläuft, zwischen einer schmalen Position, in der die Hebelmechanismen (19) nach der Bewegung der Stoffabdeckung (11) in ihre Öffnungsposition innerhalb des Aufnahmetanks (7) angeordnet sind, und einer breiten Position, in der sich die Hebelmechanismen (19) nach der Bewegung der Stoffabdeckung (11) in ihre Schließposition an der Außenseite des Aufnahmetanks (7) erstrecken, bewegbar sind; und **dadurch gekennzeichnet, dass**:
die Bedieneinheit (12) für jeden Hebelmechanismus (19) eine jeweilige Aktuatorvorrichtung (13) umfasst, um den Hebelmechanismus (19) in der Bewegungsrichtung (48) zwischen seiner schmalen und breiten Position zu bewegen;
jeder Hebelmechanismus (19) ein erstes gelenkiges Viereck (21), das mit der relativen Aktuatorvorrichtung (13) verbunden ist, und ein zweites gelenkiges Viereck (30) umfasst, das zwischen dem ersten gelenkigen Viereck (21) und der vorderen Stange (37) angeordnet ist;
jede Aktuatorvorrichtung (13) einen Elektromotor umfasst, der mit einer Ausgangswelle (14) versehen ist, die so montiert ist, dass sie sich um eine Drehachse (15) dreht, die im Wesentlichen parallel zur Bewegungsrichtung (48) ist; und
das erste gelenkige Viereck (21) jedes Hebelmechanismus (19) ein erstes Element (20) umfasst, das mit der Ausgangswelle (14) des relativen Elektromotors gekoppelt ist, um sich mit einer Dreh-Translations-Bewegung entlang und um die Drehachse (15) zu bewegen.

2. Öffnungsfähiges Dach nach Anspruch 1, wobei der Abstand (D2) zwischen den in ihrer schmalen Position angeordneten Hebelmechanismen (19), der parallel zur Bewegungsrichtung (48) gemessen wird, kleiner ist als der Abstand (D1) zwischen den in ihrer breiten Position angeordneten Hebelmechanismen (19) und als die Mindestbreite des Aufnahmetanks (7), die ebenfalls parallel zur Bewegungsrichtung (48) gemessen werden.

3. Öffnungsfähiges Dach nach Anspruch 1 oder 2, wobei die Bedieneinheit (12) ferner mindestens einen Versteifungsquerträger (41) mit einer variablen Länge umfasst, der zwischen den Hebelmechanismen (19) angeordnet ist, um die Hebelmechanismen (19) miteinander zu verbinden.

4. Öffnungsfähiges Dach nach Anspruch 3, wobei der Versteifungsquerträger (41) eine Teleskopstange oder einen Kurbelmechanismus (42) umfasst.

5. Öffnungsfähiges Dach nach einem der vorhergehenden Ansprüche, wobei das erste gelenkige Viereck (21) ferner ein zweites Element (22) und ein drittes Element (26), die drehbar mit dem ersten Element (20) verbunden sind, und ein viertes Element (24) umfasst, das drehbar mit dem zweiten und dritten Element (22, 26) verbunden ist.

6. Öffnungsfähiges Dach nach Anspruch 5, wobei das zweite gelenkige Viereck (30) ein fünftes und ein sechstes Element (31, 35), die drehbar mit dem vierten Element (24) verbunden sind, und ein siebtes Element (33) umfasst, das drehbar mit dem fünften und sechsten Element (31, 35) verbunden ist und aus dem zweiten gelenkigen Viereck (30) herausragt; wobei die vordere Stange (37) mit den siebten Elementen (33) der zwei Hebelmechanismen (19) verbunden ist.

7. Öffnungsfähiges Dach nach Anspruch 6, wobei die vordere Stange (37) durch die Zwischenlage eines relativen Verbindungsstabs (38), der mit dem siebten Element (33) und mit der vorderen Stange (37) drehbar gekoppelt ist, mit dem siebten Element (33) jedes zweiten gelenkigen Vierecks (30) gekoppelt ist.

8. Öffnungsfähiges Dach nach einem der vorhergehenden Ansprüche, wobei die Bedieneinheit (12) ferner für jeden Elektromotor eine jeweilige schraubenförmige Führung (18) umfasst, die sich um die Ausgangswelle (14) des Elektromotors erstreckt, spiralförmig um und entlang der Drehachse (15) gewickelt ist und mit einer Dreh-Translationsbewegung durch das erste Element (20) des relativen ersten gelenkigen Vierecks (21) in Eingriff steht.

9. Öffnungsfähiges nach einem der vorhergehenden Ansprüche, wobei die Stoffabdeckung (11) bei geschlossenem Dach eine gespreizte Konfiguration aufweist und bei geöffnetem Dach zudem eine U-förmig gefaltete Konfiguration innerhalb des Aufnahmetanks (7) aufweist.

10. Öffnungsfähiges Dach nach einem der vorhergehenden Ansprüche, wobei der Aufnahmetank (7) in Draufsicht eine im Wesentlichen trapezartige Form aufweist.

## Revendications

1. Toit ouvrant pour voitures de sport, le toit comprenant un caisson de réception (7) ; une capote en tissu (11) ; et une unité opérationnelle (12) pour déplacer la capote en tissu (11) entre une position d'ouverture, dans laquelle la capote en tissu (11) est logée à l'intérieur du caisson de réception (7) afin d'ouvrir le toit, et une position de fermeture, dans laquelle la capote en tissu (11) s'étend sur l'extérieur du caisson de réception (7) afin de fermer le toit ; l'unité opérationnelle (12) comprenant deux mécanismes à levier (19), qui sont parallèles l'un à l'autre et à une direction de conduite (16) de la voiture de sport, et une barre avant (37), qui s'étend entre les deux mécanismes à levier (19) et est configurée pour être couplée à une bague de support (40) d'un pare-brise avant (4) de la voiture de sport à la suite du mouvement de la capote en tissu (11) vers sa position de fermeture ; la capote en tissu (11) étant fixée à la barre avant (37) et aux deux mécanismes à levier (19) ; les deux mécanismes à levier (19) étant mobiles l'un par rapport à l'autre dans une direction de déplacement (48), qui est transversale à la direction de conduite (16) de la voiture de sport, entre une position étroite, dans laquelle les mécanismes à levier (19) sont agencés à l'intérieur du caisson de réception (7) à la suite du mouvement de la capote en tissu (11) vers sa position d'ouverture, et une position large, dans laquelle les mécanismes à levier (19) s'étendent sur l'extérieur du caisson de réception (7) à la suite du mouvement de la capote en tissu (11) vers sa position de fermeture ; et étant **caractérisé en ce que** :
l'unité opérationnelle (12) comprend, pour chaque mécanisme à levier (19), un dispositif actionneur (13) respectif pour déplacer le mécanisme à levier (19) dans la direction de déplacement (48) entre ses positions étroite et large ;
chaque mécanisme à levier (19) comprend un premier quadrilatère articulé (21) relié au dispositif actionneur (13) associé et un deuxième quadrilatère articulé (30) interposé entre le premier quadrilatère articulé (21) et la barre avant (37) ;
chaque dispositif actionneur (13) comprend un moteur électrique muni d'un arbre de sortie (14) monté de façon à être en rotation autour d'un axe de rotation (15), qui est sensiblement parallèle à la direction de déplacement (48) ; et
le premier quadrilatère articulé (21) de chaque mécanisme à levier (19) comprend un premier organe (20) couplé à l'arbre de sortie (14) du moteur électrique associé de façon à se déplacer avec un mouvement de rotation-translation le long dudit axe de rotation (15) et autour de celui-ci.

2. Toit ouvrant selon la revendication 1, dans lequel la distance (D2) entre les mécanismes à levier (19) agencés dans leur position étroite, qui est mesurée parallèlement à la direction de déplacement (48), est plus petite que la distance (D1) entre les mécanismes à levier (19) agencés dans leur position large et que la largeur minimale du caisson de réception (7), qui sont également mesurées parallèlement à la direction de déplacement (48).

3. Toit ouvrant selon la revendication 1 ou 2, dans lequel l'unité opérationnelle (12) comprend en outre au moins une traverse de renfort (41) dotée d'une longueur variable interposée entre les mécanismes à levier (19) afin de relier les mécanismes à levier (19) l'un à l'autre.

4. Toit ouvrant selon la revendication 3, dans lequel la traverse de renfort (41) comprend une barre télescopique ou un mécanisme à manivelle (42).

5. Toit ouvrant selon l'une quelconque des revendications précédentes, dans lequel le premier quadrilatère articulé (21) comprend en outre un deuxième organe (22) et un troisième organe (26), qui sont reliés au premier organe (20) d'une manière rotative, et un quatrième organe (24), qui est relié auxdits deuxième et troisième organes (22, 26) d'une manière rotative.

6. Toit ouvrant selon la revendication 5, dans lequel le deuxième quadrilatère articulé (30) comprend un cinquième et un sixième organe (31, 35), qui sont reliés au quatrième organe (24) d'une manière rotative, et un septième organe (33), qui est relié auxdits cinquième et sixième organes (31, 35) d'une manière rotative et fait saillie à partir du deuxième quadrilatère articulé (30) ; la barre avant (37) étant reliée aux septièmes organes (33) des deux mécanismes à levier (19).

7. Toit ouvrant selon la revendication 6, dans lequel la barre avant (37) est couplée au septième organe (33) de chaque deuxième quadrilatère articulé (30) par l'interposition d'une biellette (38) associée couplée au septième organe (33) et à la barre avant (37) d'une manière rotative.

8. Toit ouvrant selon l'une quelconque des revendications précédentes, dans lequel l'unité opérationnelle (12) comprend en outre, pour chaque moteur électrique, un guide hélicoïdal (18) respectif, qui s'étend autour de l'arbre de sortie (14) du moteur électrique, est enroulé comme une spirale autour dudit axe de rotation (15) et le long de celui-ci, et est mis en prise avec un mouvement de rotation-translation par le premier organe (20) du premier quadrilatère articulé (21) associé.

9. Toit ouvrant selon l'une quelconque des revendications précédentes, dans lequel la capote en tissu (11) possède, lorsque le toit est fermé, une configuration étalée et possède en outre, lorsque le toit est ouvert, une configuration pliée en U à l'intérieur du caisson de réception (7).

10. Toit ouvrant selon l'une quelconque des revendications précédentes, dans lequel le caisson de réception (7) possède, en vue de dessus, une forme sensiblement de type trapézoïde.
